# EUROPEAN PATENT APPLICATION

(11) **EP 4 528 917 A1**
(43) Date of publication of application: **26.03.2025**
(21) Application number: 23849517.0
(22) Date of filing: 04.08.2023
(51) Int. Cl.: H01M 50/636, H01M 50/147, H01M 50/183

(54) **BATTERY COVER PLATE, BATTERY, AND ELECTRIC DEVICE**

(30) Priority: 31.05.2023 CN 202321354452 U
(71) Applicant: HUIZHOU EVE POWER CO., LTD, Huizhou, Guangdong 516039 (CN)
(72) Inventor: LIU, Guangxin, Huizhou, Guangdong 516039 (CN); ZHAO, He, Huizhou, Guangdong 516039 (CN); HUANG, Liming, Huizhou, Guangdong 516039 (CN)
(74) Representative: Prinz & Partner mbB
(86) International application number: PCT/CN2023/111142
(87) International publication number: WO 2024/027813

(57) **Abstract**

The present application relates to the technical field of batteries, for example, a battery cover plate, a battery, and a powered device. The battery cover plate provided includes a cover plate body and a blockage member, where the cover plate body is provided with a vent hole which is configured to release gas during the battery formation; the blockage member can be arranged on the vent hole in a sealing manner for blockage of the vent hole, such that electrolyte injected into the battery is prevented from volatilizing through the vent hole; and the blockage member can also be torn open under the action of negative pressure to open the vent hole so as to normally release the gas in the battery, such that the vent hole can be opened without manually operating the blockage member, which simplifies the structure and makes operation easy and quick. With the above battery cover plate, for the battery and the powered device provided, the electrolyte injected into the battery can be prevented from volatilizing through the vent hole, and the gas inside the battery can be automatically released during the battery formation, which simplifies the structure and makes operation easy and quick.

## Description

This application claims the priority of a Chinese Patent Application No. 202321354452.0 filed with the China National Intellectual Property Administration (CNIPA) on May 31, 2023, the disclosure of which is incorporated herein by reference in its entirety.

### TECHNICAL FIELD

The present application relates to the technical field of battery, for example, a battery cover plate, a battery, and a powered device.

### BACKGROUND

During the battery processing, a battery cell needs to be installed into the shell first, and then a battery cover plate is placed on the shell to form a closed body. The battery cover plate is generally provided with a liquid injection hole to facilitate the injection of electrolyte into the battery through the liquid injection hole. When the liquid injection operation is completed and the battery is left to rest, a sealing screw is needed to seal the liquid injection hole to prevent the electrolyte inside the battery from volatilizing through the liquid injection hole. When the battery is subjected to a formation operation, gas expansion is likely to occur inside the battery. It is usually necessary to remove the sealing screw from the liquid injection hole to ensure the release of gas inside the battery. The above operation process requires repeatedly inserting and removing the sealing screw from the injection hole, which makes the operation complicated.

### SUMMARY

The present application provides a battery cover plate, a battery, and a powered device to prevent electrolyte injected into the battery from volatilizing and also automatically open the vent hole during battery formation to release gas inside the battery.

In a first aspect, a battery cover plate is provided according to embodiments of the present application and includes a cover plate body and a blockage member.

The cover plate body is provided with a vent hole, and the vent hole is configured to release gas during battery formation.

The blockage member can be installed on the vent hole in a sealing manner to block the vent hole, and can also be torn open under the action of negative pressure to open the vent hole.

In an embodiment, the blockage member includes a sealing adhesive paper.

The sealing adhesive paper is adhered onto the cover plate body and blocks the vent hole, the sealing adhesive paper is provided with a score line, and the sealing adhesive paper can be torn along the score line under the action of negative pressure.

In an embodiment, the score line is an arc-shaped score line with the center of the vent hole as the center, and the arc of the arc-shaped score line ranges from π/2 to 3π/2.

In an embodiment, a dimension L by which an edge of the sealing adhesive paper extends from an edge of the vent hole ranges from 3 mm to 6 mm.

In an embodiment, an adhesion strength of the sealing adhesive paper with the cover plate body is greater than 0.5 N/mm.

In an embodiment, the battery cover plate further includes a sealing member.

The sealing member is configured to seal the vent hole after the gas is released.

In an embodiment, the sealing member is a sealing nail or a sealing strip.

In an embodiment, an upper end surface of the cover plate body is provided with an accommodation recess, the vent hole is provided on a bottom wall of the accommodation recess, and the blockage member is located in the accommodation recess.

In a second aspect, a battery is provided according to embodiments of the present application, which includes a shell and a battery cell arranged inside the shell. The battery further includes the battery cover plate as described above, and the battery cover plate is covered on the shell after liquid injection.

In a third aspect, a powered device is provided according to embodiments of the present application, which includes the battery as described above. The battery is configured to supply power to the powered device.

Beneficial effects of the present application:

The battery cover plate according to the present application includes a cover plate body and a blockage member. The cover plate body is provided with a vent hole, and the vent hole is configured to release gas during the battery formation. The blockage member can be installed on the vent hole in a sealing manner to block the vent hole so that the electrolyte injected into the battery is prevented from volatilizing through the vent hole. Furthermore, when the battery is subjected to the forming operation, the blockage member can be torn open under the action of negative pressure to open the vent hole so that the normal release of gas inside the battery can be ensured, and there is no need to manually operate the blockage member to open the vent hole, which makes the structure simple and easy to operate.

A battery is further provided according to the present application, by applying the above-described battery cover plate, the electrolyte injected into the battery can be prevented from volatilizing through the vent hole, and the gas inside the battery can also be automatically released during battery formation so that the structure is simple and the operation is convenient.

A powered device is further provided according to the present application, by using the above-described battery to power the powered device, the powered device can prevent the electrolyte injected into the battery from volatilizing through the vent hole, and can also automatically release the gas inside the battery during the battery formation, so that the structure is simple and the operation is convenient.

### BRIEF DESCRIPTION OF THE DRAWINGS

FIG. 1 is a cross-sectional view of a battery cover plate according to an embodiment of the present application;
FIG. 2 is a top view of a battery cover plate according to an embodiment of the present application;
FIG. 3 is a partially enlarged view of part A in FIG. 1;
FIG. 4 is a schematic structural diagram of a battery according to an embodiment of the present application; and
FIG. 5 is a schematic structural diagram of an electric device according to an embodiment of the present application.

In the drawings:
1, cover plate body; 11, accommodation recess; 111, vent hole; 2, sealing adhesive paper; 21, score line; 100, battery cover plate; 200, shell; 300, battery cell; 400, battery

### DETAILED DESCRIPTION

In the description of this application, unless otherwise specified and limited, the terms "connected to each other", "connected" or "fixed" are to be construed in a broad sense, for example, as permanently connected or detachably connected or integrally formed; mechanically connected or electrically connected; directly connected to each other or indirectly connected to each other via an intermediary; or internally connection of two components or interaction relationship between two components. Meanings of the preceding terms in the present application may be understood based on practical situations.

In the present application, unless otherwise specified and limited, when a first feature is described as "above" or "below" a second feature, the first feature and the second feature may be in direct contact, or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of this embodiment, it should be understood that the orientation or position relationships indicated by the terms such as "upper", "lower", "left", "right", etc., are based on the orientation or position relationship shown in the drawings, which is only for the convenience of description and simplification of operation, and does not indicate or imply that the device or element referred to must have a specific orientation, be constructed and operated in a specific orientation, and therefore cannot be understood as a limitation of the present application. Furthermore, the terms "first" and "second" are only used to distinguish in the description and have no special meaning.

During the battery processing, the battery cell needs to be installed into the shell first, and then the battery cover plate is placed on the shell to form a closed body. The battery cover plate is generally provided with a liquid injection hole to facilitate the injection of electrolyte into the battery through the liquid injection hole. When the liquid injection operation is completed and the battery is left to rest, a sealing screw is needed to seal the liquid injection hole to prevent the electrolyte inside the battery from volatilizing through the liquid injection hole. When the battery is subjected to a formation operation, gas expansion is likely to occur inside the battery. It is usually necessary to remove the sealing screw from the liquid injection hole to ensure the release of gas inside the battery. The above operation process requires repeatedly inserting and removing the sealing screw from the injection hole, which makes the operation complicated.

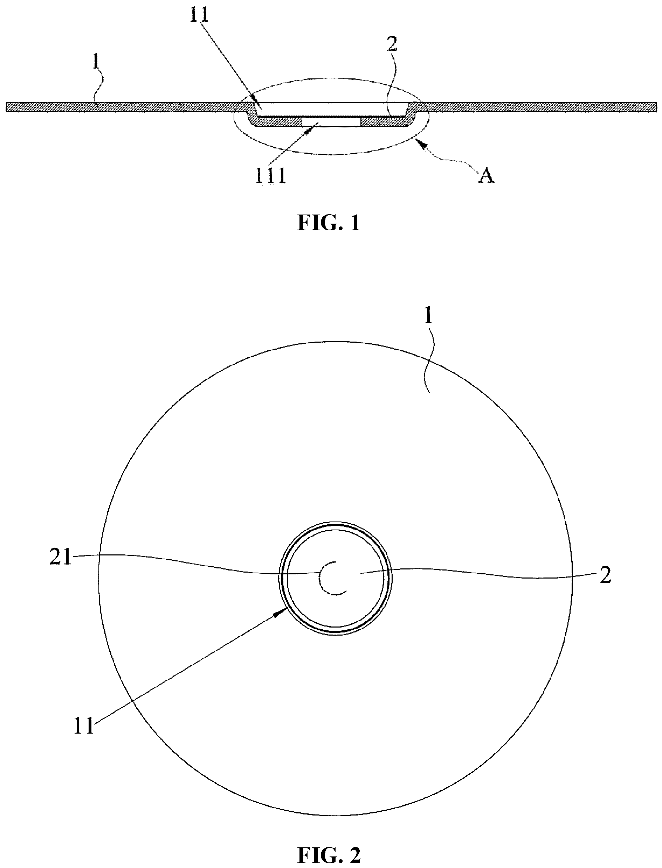

To address the above issues, as shown in FIG. 1, a battery cover plate is provided according to the embodiment and includes a cover plate body 1 and a blockage member. The cover plate body 1 is provided with a vent hole 111, and the vent hole 111 is configured to release gas during battery formation. The blockage member can be installed on the vent hole 111 in a sealing manner to block the vent hole 111, and the blockage member can also be torn open under the action of negative pressure to open the vent hole 111. After the battery is filled with electrolyte, the cover plate body 1 is closed onto the shell of the battery, and the vent hole 111 is blocked by the blockage member to prevent the electrolyte injected into the battery from volatilizing through the vent hole 111. When the battery is subjected to the forming operation, the blockage member can be torn open under the action of negative pressure inside the battery to open the vent hole 111 to ensure the normal release of gas inside the battery, so that there is no need to manually operate the blockage member to open the vent hole 111, which makes the structure simple and easy to operate.

In this embodiment, the blockage member includes a sealing adhesive paper 2 which is adhered onto the cover plate body 1 and seals the vent hole 111. The sealing adhesive paper 2 is provided with a score line 21, and the sealing adhesive paper 2 can be torn along the score line 21 under the action of negative pressure. By setting the score line 21, the sealing adhesive paper 2 can be easily torn open under the action of negative pressure or external force without manually tearing the sealing adhesive paper 2, which is convenient to operate and ensures the normal release of the gas inside the battery. In addition, the vent hole 111 is sealed by the sealing adhesive paper 2, which greatly ensures the sealing effect of the blockage. In this embodiment, the base material of the sealing adhesive paper 2 may be polyethylene glycol terephthalate (PET) or polypropylene (PP) material.

In this embodiment, as shown in FIG. 2, the score line 21 is an arc-shaped score line with the center of the vent hole 111 as the center, and the arc of the arc-shaped score line ranges from π/2 to 3π/2. The shape and position of the score line 21 are set to ensure the reliability of tearing the sealing adhesive paper 2 and the reliability of opening the vent hole 111.

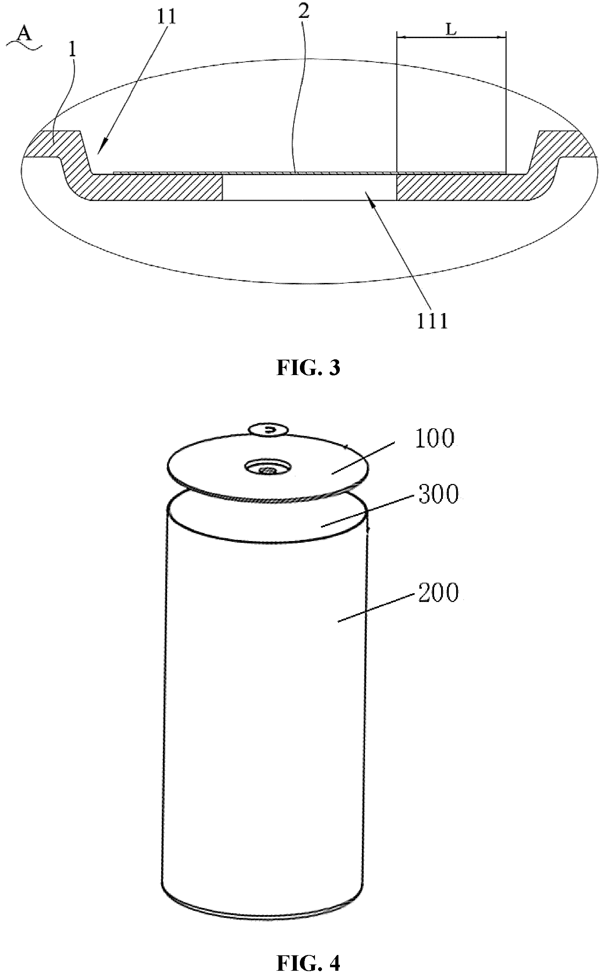

Exemplarily, as shown in FIG. 3, the dimension L by which the edge of the sealing adhesive paper 2 extends from the edge of the vent hole 111 ranges from 3 mm to 6 mm, thereby ensuring the sealing effect of the sealing adhesive paper 2 on the vent hole 111 under normal conditions. Furthermore, the adhesion strength of the sealing adhesive paper 2 with the cover plate body 1 is greater than 0.5 N/mm, thereby ensuring the stability and reliability of the sealing adhesive paper 2 adhered to the cover plate body 1.

In this embodiment, the battery cover plate further includes a sealing member (not shown in the figures) which is configured to seal the vent hole 111 after the gas is released. After the battery is subjected to formation operation, the sealing adhesive paper 2 is torn, and the vent hole 111 after the release of the gas is blocked by the sealing member, thereby ensuring the sealing of the entire battery. The sealing member may be a sealing nail, and the sealing nail is screwed into the vent hole 111 to achieve a blocking effect on the vent hole 111. The sealing member may also be a sealing strip, and the sealing strip blocks and covers the vent hole 111 to achieve a blocking effect on the vent hole 111, and the sealing strip may be fixed to the cover plate body 1 by welding to ensure the stability of the installation of the sealing strip.

As shown in FIG. 1 to FIG. 3, the upper end surface of the cover plate body 1 is provided with an accommodation recess 11, the vent hole 111 is provided on a bottom wall of the accommodation recess 11, and the blockage member is located in the accommodation recess 11. The accommodation recess 11 is provided to accommodate the blockage member to prevent an upper end surface of the blockage member from protruding from the cover plate body 1, so that the battery cover plate can be neater.

As shown in FIG. 4, a battery is further provided according to this embodiment, which includes a shell 200 and a battery cell 300 disposed inside the shell 200. The battery further includes the preceding battery cover plate 100, and the battery cover plate 100 covers the shell 200 after liquid injection. By applying the above-described battery cover plate 100, the battery according to this embodiment can prevent the electrolyte injected into the battery from volatilizing through the vent hole 111, and can also automatically release the gas inside the battery during the battery formation, so the structure is simple and the operation is convenient.

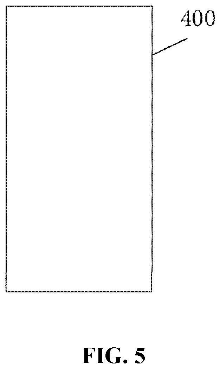

As shown in FIG. 5, a powered device is further provided according to this embodiment, the above-described battery 400 is used to power the powered device, which can prevent the electrolyte injected into the battery 400 from volatilizing through the vent hole 111, and can also automatically release the gas inside the battery during formation of the battery, so that the structure is simple and the operation is convenient.

## Claims

1. A battery cover plate, comprising:
a cover plate body (1), wherein the cover plate body (1) is provided with a vent hole (111) configured to release gas during battery formation; and
a blockage member, wherein the blockage member is capable of being installed on the vent hole (111) in a sealing manner to block the vent hole (111), and the blockage member is further capable of being torn open under an action of negative pressure to open the vent hole (111).

2. The battery cover plate according to claim 1, wherein the blockage member comprises:
a sealing adhesive paper (2), wherein the sealing adhesive paper (2) is adhered onto the cover plate body (1) and blocks the vent hole (111), the sealing adhesive paper (2) is provided with a score line (21), and the sealing adhesive paper (2) is capable of being torn open along the score line (21) under the action of negative pressure.

3. The battery cover plate according to claim 2, wherein the score line (21) is an arc-shaped score line with a center of the vent hole (111) as a center, and an arc of the arc-shaped score line ranges from π/2 to 3π/2.

4. The battery cover plate according to claim 2, wherein a dimension L by which an edge of the sealing adhesive paper (2) extends from an edge of the vent hole (111) ranges from 3 mm to 6 mm.

5. The battery cover plate according to claim 2, wherein an adhesion strength between the sealing adhesive paper (2) and the cover plate body (1) is greater than 0.5 N/mm.

6. The battery cover plate according to any one of claims 1 to 5, further comprising:
a sealing member, wherein the sealing member is configured to seal the vent hole (111) after the gas is released.

7. The battery cover plate according to claim 6, wherein the sealing member is a sealing nail or a sealing strip.

8. The battery cover plate according to any one of claims 1 to 5, wherein an upper end surface of the cover plate body (1) is provided with an accommodation recess (11), the vent hole (111) is provided on a bottom wall of the accommodation recess (11), and the blockage member is located in the accommodation recess (11).

9. A battery, comprising a shell (200) and a battery cell (300) arranged inside the shell (200), wherein the battery further comprises the battery cover plate (100) according to any one of claims 1 to 8, and the battery cover plate (100) is configured to cover the shell (200) after liquid injection.

10. A powered device, comprising the battery (400) according to claim 9, wherein the battery (400) is configured to supply power to the powered device.
